# EUROPÄISCHE PATENTANMELDUNG

(11) **EP 0 806 143 A2**
(43) Veröffentlichungstag der Anmeldung: **12.11.1997**
(21) Anmeldenummer: 97105484.6
(22) Anmeldetag: 02.04.1997
(51) Int. Cl.: A21D 2/32

(54) **Anwendung von Phospholipiden für die Backanwendung**

(30) Priorität: 08.05.1996 DE 19618439
(71) Anmelder: Lucas Meyer GmbH & Co, 20539 Hamburg 28 (DE)
(72) Erfinder: Schneider, Michael, Dr., 20539 Hamburg (DE)
(74) Vertreter: DIEHL GLAESER HILTL & PARTNER

(57) **Zusammenfassung**

Anwendung von Phospholipiden mit geringem Anteil an ungesättigten Fettsäuren als Mehlzusatz zur Einstellung gleichbleibender Backeigenschaften unterschiedlicher Mehlqualitäten und/oder in Backmitteln zwecks Verbesserung der Backwirkung (Volumensteigerung, Porung, Frischhaltung).

## Beschreibung

In der Backwarenindustrie gibt es heute zwei grundsätzlich unterschiedliche Konzepte bei der Anwendung von Phospholipiden (Lecithinen):
- der Einsatz in der Mühle als Mehlzusatz zur Einstellung gleichbleibender Backeigenschaften unterschiedlicher Mehlqualitäten (Mehlbehandlung)
- der Einsatz in Backmitteln (Compounds aus Phospholipiden/Lecithinen und anderen backwirksamen Stoffen wie Soyamehle, Enzyme, Ascorbinsäure, etc.)

Stand der Technik ist, daß bis heute nahezu ausschließlich Soyalecithine, Soyalecithin-Fraktionen oder modifizierte Soyalecithine für obige Zwecke eingesetzt werden.

Gemeinsam ist all den genannten Phospholipid(Lecithin-)-Produkten, daß sie einen hohen Anteil mehrfach ungesättigter Fettsäuren (insbesondere Linol- und Linolensäure) aufweisen. Als Maß des Anteils ungesättigter Fettsäuren dient die Jodzahl, die bei den erwähnten Phospholipiden zwischen 80 und 120 liegt. Die Backwirkung aller Phospholipide wird ihrer Wechselwirkung mit dem Kleberprotein einerseits (Erhöhung der Elastizität, verbesserter Gaseinschluß, verbesserte Dehnbarkeit) und/oder ihrer Komplexierungseignung mit dem Amylose-Anteil der Weizenstärke (Verbesserung der Frischhaltung) zugeschrieben, wobei die Wechselwirkung mit dem Kleberprotein im wesentlichen auf die grenzflächenaktive Wirkung der Phospholipide zurückzuführen ist.

In einer Vielzahl von Backversuchen wurde nun festgestellt, daß Phospholipide mit einem gegenüber den heute kommerziell eingesetzten Produkten deutlich geringeren Anteil ungesättigter Fettsäuren eine deutlich bessere Backwirkung (Volumensteigerung, Porung, Frischhaltung) aufweisen.

Eingesetzt wurden insbesondere voll- oder partiell hydrierte Pflanzenlecithine sowie auf partiell hydriertem Rapsöl basierende Ammoniumphosphatide (Emulgator YN).

In allen Fällen war gegenüber den Kontrollen (entöltes Soyalecithin, PC-angereichertes Soyalecithin, PC-abgereichertes Soyalecithin, hydrolisiertes Soyalecithin) eine deutliche Volumenverbesserung bei zumindest gleichbleibendem Porenbild und Frischhaltung zu beobachten.

## Patentansprüche

1. Anwendung von auf partiell hydriertem Rapsöl basierenden Ammoniumphosphatiden
als Mehlzusatz zur Einstellung gleichbleibender Backeienschaften unterschiedlicher Mehlqualitäten und /oder
in Backmitteln
zwecks Verbesserung der Backwirkung (Volumensteigerung, Porung, Frischhaltung).
